# DEMANDE DE BREVET EUROPEEN

(11) **EP 2 153 922 A1**
(43) Date de publication de la demande: **17.02.2010**
(21) Numéro de dépôt: 08162027.0
(22) Date de dépôt: 07.08.2008
(51) Int. Cl.: B23B 1/00

(54) **Méthode de fabrication d'un ressort en métal amorphe**

(71) Demandeur: The Swatch Group Research and Development Ltd., 2074 Marin (CH)
(72) Inventeur: Boss, Bernard, 2000, Neuchâtel (CH); Winkler, Yves, 3185, Schmitten (CH)
(74) Mandataire: Couillard, Yann Luc Raymond

(57) **Abrégé**

Procédé de fabrication d'un moyen élastique (11). Ce procédé comprend les étapes suivantes qui consistent à se munir un barreau (10). Puis ledit barreau (10) est monté sur un tour (1). Une fois cette étape réalisée, le barreau (10) est déplacé en rotation jusqu'à atteindre une vitesse (V_{R}) déterminée. Ensuite, il est appliqué au moins un moyen de coupe (9) sur ledit barreau (10). Pour finir, le moyen de coupe (9) est déplacé selon une translation avec une vitesse d'avance (V_{A}) déterminée afin de produire un copeau (11) formant ledit moyen élastique.

## Description

La présente invention concerne un procédé de fabrication d'un moyen élastique et plus particulièrement un tel moyen du type en métal amorphe.

### ARRIERE PLAN TECHNOLOGIQUE

Il est connu dans l'art antérieur de réaliser des ressorts hélicoïdaux en matériau amorphe. Cependant, ces méthodes de fabrication de ressorts utilisent le formage à chaud et/ou l'injection.

Néanmoins, ces méthodes, même si elles sont assez simples à mettre en oeuvre, ont des inconvénients. En effet, pour ces deux méthodes, des moules ou des matrices sont nécessaires. Or, les ressorts hélicoïdaux étant de formes complexes, cela a donc un impact sur la formes et le coût de ces moules. Cette complexité s'ajoute au fait que les ressorts nécessitent, notamment pour l'horlogerie, des tailles millimétriques.

Ainsi, dans le cas de ressorts ayant des sections de fil inférieures au millimètre, il est quasiment impossible de les réaliser par injection. En effet, le remplissage d'un moule ayant un rapport d'aspect, c'est à dire sa section par rapport à sa longueur aussi petit est très difficile à fabriquer.

De plus, cela est contradictoire avec la nécessité de refroidissement rapide pour l'obtention de la structure amorphe. En effet, lors du remplissage du moule, un bouchon solide pourrait se former avant le remplissage complet du moule du fait du rapide refroidissement que subirai le métal ainsi coulé.

Dans le cas du formage à chaud, le problème provient du surplus de matière indispensable pour assurer un remplissage parfait du moule. Ce surplus est alors très difficile à éliminer sur une forme aussi compliquée qu'un ressort hélicoïdal par exemple.

Un autre inconvénient est que chaque moule correspond à un unique type de ressort. En effet, la flexibilité des dimensions du ressort s'obtient en changeant de moule, ainsi à chaque longueur ou diamètre de ressort correspond un moule. Ce qui implique, pour avoir une gamme de ressorts complète, un nombre de moules important et donc des coûts importants.

### RESUME DE L'INVENTION

L'invention concerne un procédé de fabrication d'un ressort qui pallie les inconvénients susmentionnés de l'art antérieur en proposant un procédé de fabrication d'un ressort qui est à la fois simple, et peu coûteux à fabriquer. De plus, le procédé autorise la fabrication de différents types de ressort sans changer l'outillage.
A cet effet, l'invention concerne un procédé de fabrication d'un ressort, caractérisé en ce qu'il comprend les étapes suivantes :
a) se munir d'un barreau ;
b) monter ledit barreau sur un tour ;
c) déplacer le barreau en rotation selon une vitesse déterminée ;
d) appliquer au moins un moyen de coupe sur ledit barreau ; et
e) déplacer selon une translation ledit au moins un moyen de coupe par rapport au barreau avec une vitesse d'avance déterminée afin de produire un copeau formant ledit moyen élastique.

Avantageusement, cette méthode de fabrication de ressort en métal amorphe est beaucoup plus simple que les méthodes selon l'art antérieur. En effet, la méthode de fabrication selon la présente invention utilise le tournage qui est très simple à mettre en oeuvre.

D'autre part, cette méthode, outre sa facilité de mise en oeuvre, est peu coûteuse. En effet, elle nécessite un nombre d'outillage minimal et peu techniques.

Des modes de réalisation avantageux de cette méthode de fabrication d'un ressort font l'objet des revendications dépendantes 2 à 17.

Cet avantage en termes de coûts est encore accentué par la flexibilité de la présente méthode de fabrication puisqu'un même outillage peut être utilisé pour fabriquer plusieurs ressorts en changeant uniquement par exemple les dimensions du barreau en métal amorphe ou celles du moyen de coupe ou le positionnement dudit moyen qui déterminent les dimensions dudit copeau et donc du ressort.

### BREVE DESCRIPTION DES FIGURES

Les buts, avantages et caractéristiques de la méthode de fabrication d'un ressort selon la présente invention apparaîtront plus clairement dans la description détaillée suivante d'au moins une forme de réalisation de l'invention donnée uniquement à titre d'exemple non limitatif et illustrée par les dessins annexés sur lesquels :
- la figure 1 représente de manière schématique un tour servant à la fabrication du ressort selon la présente invention ;
- la figure 2 représente de manière schématique une vue de profil lors d'une étape de coupe selon la présente invention ;
- la figure 3 représente de manière schématique une variante d'un premier mode de réalisation des moyens de coupe de la présente invention ; et
- la figure 4 représente de manière schématique un second mode de réalisation des moyens de coupe de la présente invention.

### DESCRIPTION DETAILLEE

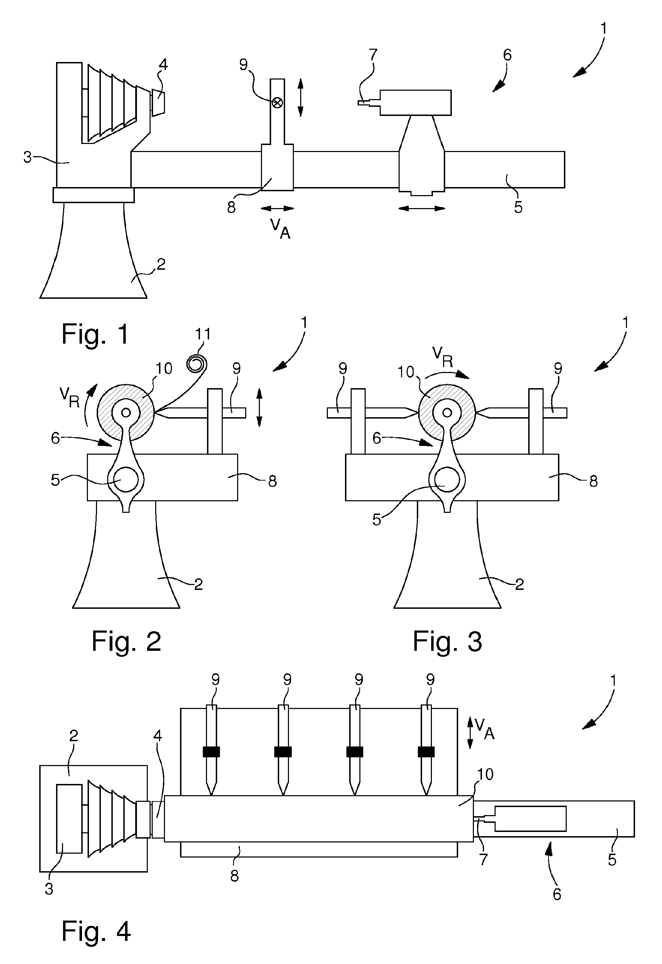

La figure 1 représente le dispositif 1 servant à fabriquer le ressort selon la présente invention. Ce dispositif comporte un tour 1 comprenant un socle 2 soutenant une poupée 3 sur laquelle est installé un arbre d'entrainement 4.

Cette poupée 3 supporte aussi une perche 5 sur laquelle est fixée une contre-poupée 6. Cette contre-poupée 6 est montée de façon coulissante sur ladite perche 5 afin de pouvoir s'adapter en longueur à la taille de la pièce à travailler. Afin de pincer cette pièce, la contre-poupée 6 est munie d'une broche 7 montée libre en rotation. L'axe de ladite broche 7 est alors le même que celui de l'arbre 4 porté par la poupée 3.

La perche 5 est aussi utilisée pour supporter un mécanisme de fixation 8 pour un moyen de coupe 9 tel qu'un burin 9. Ce mécanisme de fixation 8 est destiné à positionner le burin 9 par rapport à l'axe broche 7 - arbre 4.

Selon la méthode de la présente invention, il est en premier lieu nécessaire de se munir d'un barreau 10 afin de l'usiner dans le but de produire un ressort. Préférentiellement, ce barreau 10 est réalisé en matériau amorphe par exemple du type précieux ou un de ces alliages. Un tel matériau précieux peut être par exemple de l'or, du platine, du palladium, du rhénium, du ruthénium, du rhodium, de l'argent, de l'iridium ou de l'osmium.

Une fois ce barreau 10 réalisé, il est monté sur le tour 1, pincé entre la broche 7 et l'arbre 4. Il est bien entendu fait en sorte que l'axe du barreau 10 cylindrique soit confondu avec les axes de la broche 7 et de l'arbre 4.

A la suite de cela, ledit barreau 10 est mis en rotation selon la vitesse V_{R} désirée. Cette dernière est préférentiellement comprise entre 1 et 50 m.min⁻¹. Lorsque le barreau 10 a atteint une vitesse de rotation V_{R} stabilisée, des moyens de coupe 9 sont appliqués sur ledit barreau 10 afin de réaliser un copeau 11 comme visible à la figure 2. Ces moyens de coupe 9 peuvent par exemple se présenter sous la forme d'un burin 9.

Selon un premier mode de réalisation, le burin 9 est enfoncé jusqu'à une profondeur déterminée puis translaté le long du barreau 10. Un copeau 11 ainsi formé prend alors la forme d'un ressort.

En effet, un métal amorphe, par l'absence de structure cristalline autorise la réalisation de copeau 11 de très grande longueur et de très bonne régularité sans rupture.

D'autre part, ce procédé de fabrication de ressort est aussi très flexible puisque les dimensions du copeau 11 utilisé comme ressort sont facilement modifiables.

En effet, la profondeur de pénétration du burin 9 dans ledit barreau 10 détermine l'épaisseur de la section du copeau 11 alors que le profil de l'extrémité du burin 9 coupant le barreau 10 détermine la longueur de la section du copeau 11. De même que l'angle d'attaque du burin 9 sur le barreau 10 peut être choisi afin d'adapter la géométrie du copeau 11.

De plus, a vitesse de rotation V_{R} constante, la vitesse de translation VA permet de réaliser le nombre de spires désirées. Effectivement, cette translation est réalisée à une vitesse d'avance déterminée VA et permet de définir l'espacement entre les spires. Il existe ainsi une corrélation entre la vitesse d'avance VA et l'espacement entre les spires, cette corrélation étant que plus la vitesse d'avance VA est élevée et plus l'espacement entre les spires est important. Cela peut être expliqué par le fait que le nombre de spires est lié au nombre de tour effectué par ledit barreau 10 lors de la translation dudit burin 9. Ainsi, pour une vitesse d'avance VA élevée, le nombre de tour réalisé pendant la translation sera faible donc le copeau 11 n'aura que peu de spires. A l'inverse, pour une vitesse d'avance VA lente, le nombre de tours réalisés pendant la translation sera élevé, donc le copeau 11 aura un nombre plus élevé de spires. On comprend donc que le ressort 11 fabriqué comportera pour la vitesse lente plus de spires et donc un pas entre les spires plus petit que pour la vitesse élevée. Ainsi, il est possible de modifier les caractéristiques des ressorts 11 en modifiant la vitesse VA, celle-ci n'étant pas obligatoirement uniforme sur l'intégralité de la translation. Il est alors possible de réaliser différents types de ressorts, tels que des ressorts de compression et de traction par exemple.

Dans un mode de réalisation préférentiel, la vitesse d'avance VA est comprise entre 0.005 et 2 m.min⁻¹ alors que la vitesse de rotation V_{R} est elle comprise entre 1 et 50 m.min⁻¹ ce qui donne un rapport V_{R}/V_{A} qui est compris entre 150 à 1000. Bien entendu, d'autres vitesses de rotation V_{R} et d'avance VA peuvent être envisagées.

De plus, les dimensions du barreau 10 en lui-même permettent de modifier les dimensions du copeau 11.

D'autre part, les spires qui composent le ressort 11 fabriqué selon la présente invention, ne sont pas forcement uniformes. Il peut être prévu de modifier l'écartement entre les spires en modifiant la vitesse d'avance V_{A} ou de rotation V_{R} pendant la réalisation dudit ressort 11. De même, le diamètre du ressort peut ne pas être constant sur la totalité du ressort 11. Il est alors possible de réaliser des ressorts coniques en modifiant la position de l'angle d'attaque du burin 9 par rapport au barreau 10 pendant la translation.

Dans une première variante représentée à la figure 3, il est prévu que plusieurs moyens de coupe 9 soient utilisés. En effet, afin de gagner en productivité, la multiplication du nombre de moyens de coupe 9 permet de réaliser plusieurs copeaux 11 en même temps. Dans, cette première variante, la répartition de la multitude de moyens de coupe 9 est axiale et coplanaire. Préférentiellement, les moyens de coupe 9 sont répartis selon une symétrie centrale. Ainsi, pour deux moyens de coupe 9, ceux-ci sont diamétralement opposés, pour trois moyens de coupe 9, ceux-ci sont disposés tout les 120° et ainsi de suite.

Dans un second mode de réalisation, la translation des moyens de coupe 9 n'est pas longitudinale mais radiale. En effet, si une avance longitudinale permet la réalisation d'un ressort hélicoïdal, une avance radiale permet de réaliser un ressort spiral. Dans le cas d'une translation radiale, les moyens de coupe 9 sont enfoncés de plus en plus dans le barreau 10. La vitesse de rotation V_{R} est alors modifiée afin de garder un débit du copeau 11 constant. En effet, au fur et à mesure de la coupe, la circonférence du barreau décroît. Dés lors, la vitesse de rotation V_{R} du barreau 10 doit être augmentée au fur et à mesure, pour que le copeau 11 fabriqué, soit sensiblement uniforme. Lorsque les moyens de coupe 9 ne sont plus enfoncés, le copeau 11 finit par se détacher. Bien entendu, ce mode de réalisation peut être aussi utilisée avec une multitude de moyens de coupe 9, ceux-ci étant placés sur le long du barreau 10 comme représenté à la figure 4. Bien entendu, la répartition de ces moyens de coupe 9 peut être équidistante ou non ainsi que coplanaire ou non.

Dans une variante, le copeau 11 subit une attaque chimique, après sa fabrication, par exemple dans un bain d'acide. Ce bain d'acide a plusieurs fonctions. Premièrement, ce bain d'acide permet d'agir sur la forme du copeau 11. En effet, en plongeant ledit copeau 11 dans un bain d'acide, le copeau 11 va alors être modifié au niveau de sa taille, l'acide le dissolvant. De plus, cela permet également d'éliminer les bavures qui peuvent être présentes suite à la fabrication du copeau 11. Ce bain d'acide est donc un moyen simple de modifier les dimensions du copeau 11, surtout sa forme et sa section. Et particulièrement, plonger le ressort 11 dans un bain d'acide permet de réaliser des géométries très fines qui seraient impossibles ou très difficiles à obtenir avec un burin 9.

Deuxièmement, le bain d'acide permet d'éliminer les éléments cristallins du copeau 11. En effet, lors de la réalisation de ces copeaux 11, il se peut que le frottement du burin 9 sur le barreau 10 provoque un échauffement de ce dernier, même en présence de lubrification. Cet échauffement devrait normalement entrainer une cristallisation du copeau 11 si le refroidissement n'est pas suffisamment rapide. Dans les faits, cette cristallisation lorsqu'elle est présente, n'est que partielle et essentiellement située sur la périphérie de copeau 11. Ainsi, lorsque le copeau 11 est plongé dans l'acide, ce dernier va dissoudre en partie le copeau 11 en commençant par sa périphérie et donc éliminer les parties cristallines. Préférentiellement, c'est un bain d'acide fluorhydrique qui sera utilisé. Bien entendu, d'autres acides sont possibles.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention défini par les revendications annexées.

## Revendications

1. Procédé de fabrication d'un moyen élastique (11), **caractérisé en ce qu'**il comprend les étapes suivantes :
a) se munir d'un barreau (10) ;
b) monter ledit barreau (10) sur un tour ;
c) déplacer le barreau (10) en rotation selon une vitesse (V_{R}) déterminée ;
d) appliquer au moins un moyen de coupe (9) sur ledit barreau ; et
e) déplacer selon une translation ledit au moins un moyen de coupe (9) par rapport au barreau (10) avec une vitesse d'avance (VA) déterminée afin de produire un copeau (11) formant ledit moyen élastique.

2. Procédé selon la revendication 1, **caractérisé en ce que** la translation des moyens de coupe (9) est axiale afin de former un moyen élastique du type hélicoïdal.

3. Procédé selon la revendication 1, **caractérisé en ce que** la translation des moyens de coupe (9) est radiale afin de former un moyen élastique du type spiral.

4. Procédé selon l'une des revendications 1 à 3, **caractérisé en ce qu'**au moins deux moyens de coupe (9) sont appliqués sur ledit barreau.

5. Procédé selon les revendications 2 et 4, **caractérisé en ce que** lesdits au moins deux moyens de coupe (9) sont coplanaires radialement par rapport audit barreau.

6. Procédé selon la revendication 5, **caractérisé en ce que** lesdits au moins deux moyens de coupe (9) sont répartis selon une symétrie centrale.

7. Procédé selon les revendications 3 et 4, **caractérisé en ce que** lesdits au moins deux moyens de coupe (9) sont coplanaires axialement par rapport audit barreau.

8. Procédé selon la revendication 7, **caractérisé en ce que** lesdits au moins deux moyens de coupe (9) sont répartis à équidistance.

9. Procédé selon l'une des revendications 1 à 8, **caractérisé en ce que** le déplacement des moyens de coupe (9) est constant afin d'obtenir une géométrie uniforme.

10. Procédé selon l'une des revendications 1 à 8, **caractérisé en ce que** le déplacement des moyens de coupe (9) est non constant afin de sélectivement modifier la géométrie dudit ressort.

11. Procédé selon l'une des revendications 1 à 10, **caractérisé en ce que** la vitesse de rotation (V_{R}) est comprise entre 1 et 50 m.min⁻¹.

12. Procédé selon l'une des revendications 1 à 11, **caractérisé en ce que** la vitesse d'avance (VA) est comprise entre 0.005 et 0.2 m.min⁻¹.

13. Procédé selon l'une des revendications 1 à 12, **caractérisé en ce que** le rapport (V_{R}/V_{A}) est compris entre 150 à 1000.

14. Procédé selon l'une des revendications 1 à 13, **caractérisé en ce qu'**il comprend après l'étape e) l'étape suivante :
f) réaliser une attaque chimique du moyen élastique (11) afin de le polir et/ou de diminuer sa section.

15. Procédé selon l'une des revendications 1 à 14, **caractérisé en ce que** le barreau (10) est réalisé en matériaux au moins partiellement amorphe.

16. Procédé selon la revendication 15, **caractérisé en ce que** ledit matériau du barreau comprend au moins un élément métallique.

17. Procédé selon la revendication 16, **caractérisé en ce que** ledit au moins un élément métallique est du type précieux ou un de ses alliages.
